(19) Europäisches Patentamt / European Patent Office / Office européen des brevets

(11) **EP 4 093 976 B1**

(12) **FASCICULE DE BREVET EUROPÉEN**

(45) Date de publication et mention de la délivrance du brevet:
**30.04.2025 Bulletin 2025/18**

(21) Numéro de dépôt: **21700974.5**

(22) Date de dépôt: **22.01.2021**

(51) Classification Internationale des Brevets (IPC):
**F04D 29/32** *(2006.01)*      **F04D 29/54** *(2006.01)*
**F04D 29/16** *(2006.01)*

(52) Classification Coopérative des Brevets (CPC):
**F04D 29/547; F01D 5/143; F04D 29/164; F04D 29/321; F04D 29/542;** F05D 2240/80; F05D 2250/184; F05D 2250/70; Y02T 50/60

(86) Numéro de dépôt international:
**PCT/EP2021/051462**

(87) Numéro de publication internationale:
**WO 2021/148607 (29.07.2021 Gazette 2021/30)**

(54) **BASCULEMENT ONDULÉ DE PLATEFORMES AUX ENTREFERS ROTOR-STATOR DANS UN COMPRESSEUR DE TURBOMACHINE**

WELLIGES KIPPEN VON PLATTFORMEN AN DEN SPALTEN ZWISCHEN ROTOR UND STATOR IN EINEM TURBOMASCHINENVERDICHTER

WAVY TILTING OF PLATFORMS AT THE GAPS BETWEEN ROTOR AND STATOR IN A TURBOMACHINE COMPRESSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.01.2020 FR 2000683**

(43) Date de publication de la demande:
**30.11.2022 Bulletin 2022/48**

(73) Titulaire: **SAFRAN AIRCRAFT ENGINES**
**75015 Paris (FR)**

(72) Inventeurs:
• **SCHVALLINGER, Michaël, Franck, Antoine**
**77550 MOISSY CRAMAYEL (FR)**
• **CAVAREC, Mickael**
**77550 MOISSY CRAMAYEL (FR)**

(74) Mandataire: **Ipsilon Benelux**
**76, rue de Merl**
**2146 Luxembourg (LU)**

(56) Documents cités:
WO-A2-2010/000788      FR-A1- 2 960 604
US-A1- 2008 310 961    US-A1- 2013 156 562
US-A1- 2013 156 563    US-A1- 2017 218 769
US-A1- 2019 003 323    US-B1- 6 524 070

**Description**

**Domaine technique**

L'invention a trait au domaine des turbomachines, plus particulièrement des propulseurs à réaction pour aéronefs.

**Technique antérieure**

Dans une turbomachine, la veine fluide annulaire traversant la machine est délimitée, dans le compresseur et la turbine, par une surface de guidage extérieure, généralement formée par le carter de la machine, et une surface intérieure de guidage formée par les plateformes annulaires de rangées d'aubes rotoriques et statoriques se succédant en alternance.

Un des paramètres clés dans la performance et l'opérabilité des compresseurs et des turbines de turbomachines est le bon alignement des plateformes annulaires intérieures des parties fixes et mobiles en vue d'assurer un guidage aérodynamique optimal de la veine fluide.

Or le passage pour la veine fluide est parsemé d'irrégularités formées essentiellement par les aubes et les entrefers entre les plateformes annulaires de rangées d'aubes rotoriques et statoriques, perturbant l'écoulement.

Aussi les tolérances de fabrication et d'assemblage de ces différentes pièces reconstituant cette surface intérieure de guidage de la veine fluide font que des ressauts, défavorables d'un point de vue aérodynamique, peuvent apparaître. Les ressauts formant une marche montante, dans le sens d'écoulement de fluide, sont sensiblement plus défavorables, d'un point de vue aérodynamique, que les ressauts formant une marche descendante.

Les règles usuelles de l'état de l'art de la conception sont basées sur ces considérations géométriques pour effectuer ce bon alignement de surface interne de guidage, essentiellement en inclinant les plateformes et/ou en prévoyant un arrondi aux bords amonts des plateformes, de manière à former des marches descendantes dans les configurations les plus défavorables dans les tolérances de fabrication et d'assemblage. Cette approche présente cependant des limitations, essentiellement en ce qu'elle se limite à des considérations géométriques, et est par conséquent sujette à amélioration en vue d'optimiser l'écoulement de la veine fluide.

Le document de brevet US 2008/0310961 A1 divulgue un ensemble d'étage(s) de compression d'une turbomachine, suivant le préambule de la revendication 1, et un procédé de dimensionnement d'au moins une plateforme annulaire d'une rangée d'aubes statoriques et/ou d'une rangée d'aubes rotoriques d'un ensemble d'étage(s) de compression d'une turbomachine, suivant le préambule de la revendication 7.

Le document US6524070B1 divulgue une soufflante avec des plateformes dont la surface extérieure est creusée entre deux aubes dans le but de réduire les contraintes circonférentielles dans les plateformes.

**Exposé de l'invention**

L'invention a pour objectif de pallier au moins un des inconvénients de la technique antérieure susmentionnée. Plus particulièrement, l'invention a pour objectif d'améliorer l'écoulement de la veine fluide au sein d'un compresseur, en particulier le long de la surface de guidage intérieure.

L'invention a pour objet un ensemble d'étage(s) de compression d'une turbomachine, suivant la revendication 1.

En fonction des tolérances de fabrication, le profil nominal peut être aligné avec la plateforme annulaire amont tout en restant parallèle à un profil théorique et parfait de la veine fluide, en particulier aligné avec le bord aval lorsque ladite plateforme annulaire amont présente également un profil longitudinal incliné.

La ou des plateformes annulaires peuvent être segmentées. Leur circonférence correspond à leur enveloppe autour de l'axe principal.

Selon un mode avantageux de l'invention, l'inclinaison du profil longitudinal extérieur de la ou de chacune des plateformes annulaires, par rapport au profil nominal de la veine fluide contribue à un abaissement d'une distance radiale $I_{Ri}$ et/ou $I_{Si}$, respectivement, d'un bord amont dudit profil longitudinal extérieur, par rapport audit profil nominal de la veine fluide.

Selon un mode avantageux de l'invention, les valeurs maximale et minimale de distance radiale $I_{Ri}$ et/ou $I_{Si}$ d'abaissement de bord amont du profil longitudinal extérieur de la ou de chacune des plateformes annulaires, par rapport au profil nominal de la veine fluide, présentent une différence A comprise entre 0.05 et 0.15mm.

Selon un mode avantageux de l'invention, l'abaissement de bord amont du profil longitudinal extérieur de la ou de chacune des plateformes annulaires par rapport au profil nominal de la veine fluide est réalisé non seulement par l'inclinaison, mais aussi par un arrondi du bord amont dudit profil longitudinal extérieur.

Selon un mode avantageux de l'invention, l'arrondi du bord amont du profil longitudinal extérieur de la ou des plateformes annulaires présente un rayon de courbure $R_{Ri}$ ou $R_{Si}$, respectivement, supérieur à 5mm et/ou inférieur à 15mm. Selon un mode avantageux de l'invention, l'arrondi du bord amont du profil longitudinal extérieur de la ou de chacune des plateformes annulaires s'étend sur une distance supérieure à 20% et/ou inférieure à 30% de l'étendue totale dudit profil longitudinal extérieur.

Selon un mode avantageux de l'invention, l'inclinaison du profil longitudinal extérieur de la ou de chacune des plateformes annulaires, par rapport au profil nominal de la veine fluide, oscille le long de la circonférence d'au moins une plateforme annulaire statorique et d'au moins une plateforme annulaire rotorique, l'inclinaison minimale du profil longitudinal extérieur de l'au moins une plateforme annulaire rotorique étant supérieure à l'inclinaison minimale du profil longitudinal extérieur de l'au moins une plateforme annulaire statorique, respectivement.

Avantageusement, l'inclinaison minimale du profil longitudinal extérieur de l'au moins une plateforme annulaire rotorique est supérieure à 150% de l'inclinaison minimale du profil longitudinal extérieur de l'au moins une plateforme annulaire statorique. L'invention a également pour objet un procédé de dimensionnement d'au moins une plateforme annulaire d'une rangée d'aubes statoriques et/ou d'une rangée d'aubes rotoriques d'un ensemble d'étage(s) de compression d'une turbomachine, selon la revendication 7.

Les mesures de l'invention sont intéressantes en ce qu'elles permettent d'optimiser l'écoulement aérodynamique de la veine fluide, en tenant compte de particularités de l'écoulement précisément dans les différents entrefers, ces particularités pouvant changer d'entrefer à entrefer. Elles permettent également d'optimiser l'écoulement aérodynamique de la veine fluide aux conditions les plus défavorables des tolérances de fabrication et d'assemblage.

## Brève description des dessins

[Fig 1] est une vue en coupe longitudinale d'une turbomachine ;

[Fig 2] est une vue de détail, en coupe longitudinale, d'un entrefer entre une rangée d'aubes statoriques et une rangée d'aubes rotoriques ;

[Fig 3] est une représentation schématique de basculement de la surface intérieure de guidage de la veine fluide, tenant compte de tolérances de fabrication ;

[Fig 4] est une représentation schématique des vecteurs vitesses de la veine fluide dans les entrefers entre les rangées d'aubes statoriques et rotoriques ;

[Fig 5] est une représentation schématique en coupe longitudinale d'une rangée d'aubes statoriques, illustrant une recirculation d'air dans le joint tournant avec le rotor ;

[Fig 6] est une représentation schématique d'inclinaisons et d'arrondis de plateformes formant la surface intérieure de guidage de la veine fluide ;

[Fig 7] est une représentation géométrique détaillée de l'inclinaison et de l'arrondi du profil longitudinal supérieur d'une plateforme annulaire d'une rangée d'aubes statoriques ou rotoriques ;

[Fig 8] est une représentation schématique de variations cycliques du basculement de la plateforme d'une rangée d'aubes statoriques ou rotoriques, conformément à l'invention.

## Description détaillée

Dans la description qui va suivre, les notions d'« intérieur(e) » et d'« extérieur(e) » se réfèrent à la direction radiale par rapport à l'axe principal de la turbomachine. La notion d'« intérieur(e) » exprime une position plus rapprochée de l'axe en question par rapport à la notion d'« extérieur(e) » et vice versa.

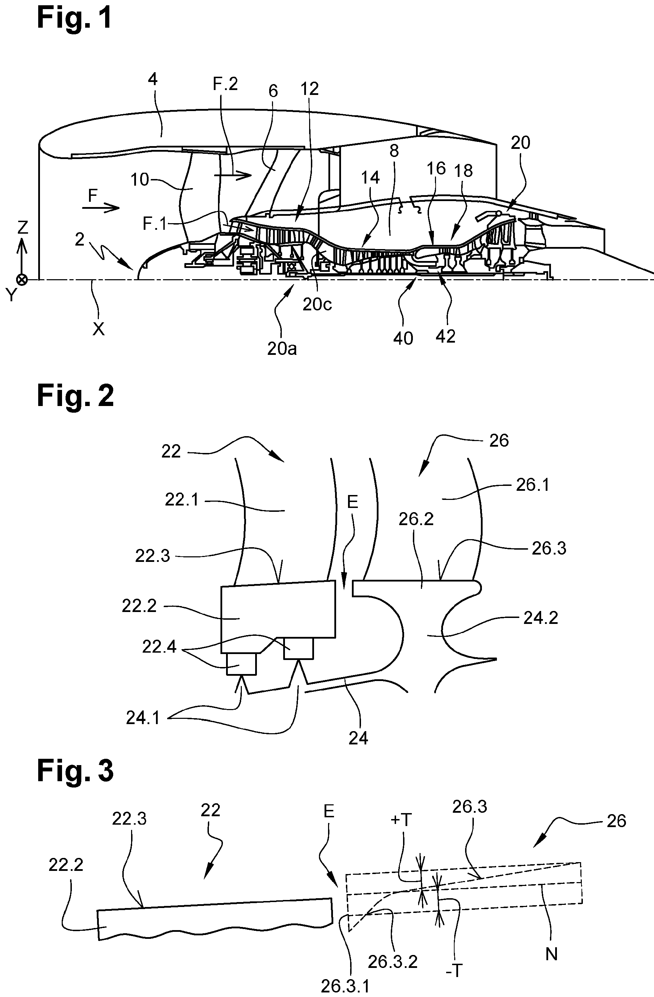

La figure 1 est une vue en coupe longitudinale d'une turbomachine axiale formant un propulseur à réaction pour avion. La turbomachine 2 est logée à l'intérieur d'une nacelle extérieure 4 via des aubes de guidage 6 et des bras de maintien (non représentés). Ces derniers assurent une fixation rigide entre la nacelle 4 et le carter 8 de la turbomachine 2. Cette dernière comprend, essentiellement, d'amont en aval le long de l'axe principal X de la machine, une soufflante 10, plus couramment désignée par l'expression anglo-saxonne « turbofan », un compresseur basse-pression 12, un compresseur haute-pression 14, une chambre de combustion 16, une turbine haute-pression 18 et une turbine basse-pression 20. Le flux d'air F entrant dans la nacelle 4, en amont de la turbomachine 2, est divisé en deux flux d'air F.1 et F.2 après la soufflante 10, à savoir en un flux primaire F.1 formant une veine fluide annulaire circulant à l'intérieur de la turbomachine 2, et un flux secondaire F.2 formant également une veine fluide annulaire concentrique au flux primaire F.1, délimitée par le carter 8 de la turbomachine 2 et la paroi interne de la nacelle 4. Les flux primaire F.1 et secondaire F.2 se rejoignent à la sortie de la turbomachine 2. Cette architecture de turbomachine est en soi bien connue de l'homme de métier et ne requiert pas davantage d'explications.

Les compresseurs basse-pression 12 et haute-pression 14 sont constitués d'une alternance de parties mobiles et parties fixes, plus particulièrement d'une alternance de rangées d'aubes rotoriques et de rangées d'aubes statoriques. Les aubes rotoriques, ou mobiles, sont montées sur un rotor de la turbomachine alors que les aubes statoriques, ou fixes, sont montées sur le carter 8 de la turbomachine. A cet effet, la surface intérieure de guidage de veine fluidique du flux primaire F.1 est formée par une alternance de plateformes annulaires mobiles et fixes formant des entrefers.

La figure 2 illustre de manière schématique un entrefer E entre une rangée 22 d'aubes statoriques 22.1, couramment désignée rangée statorique 22, et une rangée 26 d'aubes rotoriques 26.1, couramment désignée rangée ou roue rotorique 26. La rangée statorique 22 comprend une virole interne 22.2 formant une plateforme annulaire avec un profil longitudinal extérieur 22.3. La virole interne 22.2 supporte sur une face intérieure des moyens d'étanchéité tournants 22.4 avec des léchettes 24.1 formées sur le rotor 24. La rangée rotorique 26 comprend les aubes rotoriques 26.1 supportées par le rotor 24. Ce dernier comprend en l'occurrence une excroissance annulaire 24.2 formant ou supportant la plateforme interne 26.2 présentant un profil longitudinal extérieur 26.3 généralement aligné avec le profil longitudinal extérieur 22.3 de la plateforme 22.2 de la rangée statorique 22. L'entrefer E est formé par le jeu axial mécanique entre les bords adjacents des plateformes 22.3 et 26.3, en l'occurrence entre le bord aval de plateforme 22.2 et le bord amont de la plateforme 26.2.

La figure 3 illustre de manière schématique l'influence des tolérances de fabrication et d'assemblage sur l'alignement entre ces plateformes adjacences. La plateforme 22.2 de la rangée statorique 22 de la figure 2, avec son profil longitudinal supérieur 22.3, est illustrée de manière schématique. Le profil nominal N de la plateforme de la rangée rotorique 26 est représenté en trait interrompu (trait d'axe). Ce profil est parfaitement aligné avec celui de la rangée statorique en amont. Les positions extrêmes de ce profil théorique sont représentées en trait pointillé, correspondant aux tolérances +T et -T. On constate alors que dans le cas de la tolérance supérieure +T, le profil forme une marche montante, particulièrement défavorable d'un point de vue aérodynamique. En effet, les pertes aérodynamiques d'une marche montante saillante sont deux fois plus importantes que les pertes aérodynamiques d'une marche descendante d'une même amplitude. Aussi, les pertes aérodynamiques d'une marche montante avec un arrondi ou un chanfrein sont grandement réduites par rapport aux pertes aérodynamiques d'une marche montante et saillante (c'est-à-dire sans arrondi ou chanfrein). Conformément à l'invention, il peut alors être prévu d'incliner le profil 26.3 vers l'intérieur et vers l'amont par rapport au profil nominal N et optionnellement de prévoir un arrondi ou un chanfrein, 26.3.2, à son bord amont 26.3.1, de manière à ce qu'au maximum des tolérances de fabrication et d'assemblage, en l'occurrence +T, le profil 26.3 ne forme pas de marche montante. L'inclinaison du profil vers l'intérieur et vers l'amont consiste, à partir d'un profil nominal, à faire descendre le bord amont par rapport au bord aval. Il est toutefois entendu que le profil n'est pas nécessairement rectiligne.

Ce qui vient d'être décrit en relation avec la figure 2 et plus particulièrement la figure 3 s'applique également au profil longitudinal supérieur de la plateforme d'une rangée statorique disposée directement en aval d'une rangée rotorique.

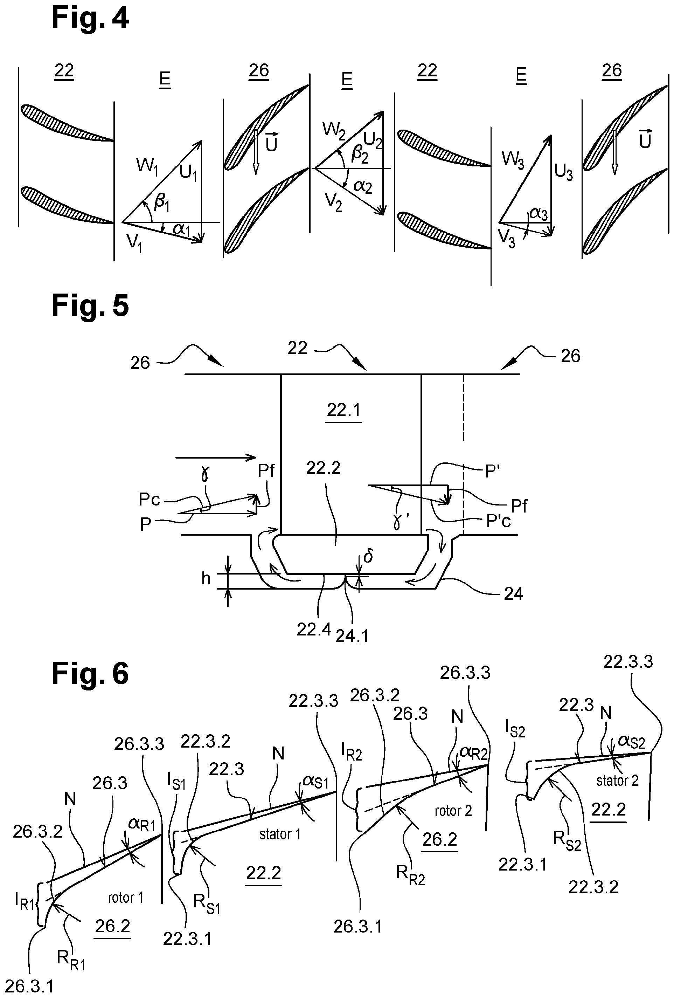

La figure 4 est une représentation schématique des vecteurs de vitesse de la veine fluide dans les entrefers entre des rangées d'aubes statoriques et rotoriques, illustrant les vitesses absolues et relatives (c'est-à-dire dans un référentiel tournant avec le rotor). A la figure 4 sont représentées deux alternances de rangée d'aubes statoriques et de rangée d'aubes rotoriques, en l'occurrence une rangée statorique 22, suivie d'une rangée rotorique 26, suivie d'une rangée statorique 22, suivie par une rangée rotorique 26. Pour des raisons de clarté d'exposé de l'invention, les rangées statoriques ont toutes le même signe de référence 22, étant toutefois entendu que ces rangées ne sont pas identiques mais peuvent présenter des caractéristiques communes relatives à la présente invention. La même chose s'applique aux rangées rotoriques présentant le signe de référence 26.

A la figure 4, on peut observer le vecteur de vitesse absolue $V_1$ du flux d'air à la sortie de la première rangée statorique 22. Ce vecteur est orienté essentiellement suivant la corde du profil de l'aube en amont ; il présente une inclinaison $\alpha_1$ par rapport à la direction axiale, plus précisément la direction située dans un plan axial et tangente au profil longitudinal supérieur de la plateforme annulaire 22. Cette direction correspond à la direction axiale si la veine fluide est parfaitement cylindrique, ce qui n'est pas nécessairement le cas. Si on se met du point de vue de la rangée rotorique 26 directement en aval, où la plateforme tourne à une vitesse U, l'écoulement fluide est suivant le vecteur de vitesse $W_1$. Ce vecteur de vitesse relative $W_1$ du flux d'air entrant dans la rangée rotorique 26 correspond au vecteur $V_1$ auquel on a soustrait le vecteur $U_1$ et présente une inclinaison $\beta_1$ par rapport à la direction axiale, qui est opposé à l'angle $\alpha_1$ et est sensiblement supérieur. Le déplacement physique du flux d'air dans l'entrefer E (exagéré de manière substantielle à la figure 4) de la rangée statorique 22 vers la rangée rotorique 26 correspond au vecteur $V_1$, c'est-à-dire dans un repère fixe, alors que ce même flux présente un vecteur de vitesse $W_1$ par rapport aux aubes de la rangée rotorique 26, sensiblement différent de $V_1$.

Toujours en référence à la figure 4, le flux d'air sortant de la rangée rotorique 26 évoquée ci-avant (celle de gauche) présente un vecteur de vitesse relative par rapport à ladite rangée, $W_2$, essentiellement orienté suivant la corde du profil des aubes de la rangée en question, et formant un angle $\beta_2$ par rapport à la direction axiale. Si on lui additionne le vecteur de vitesse $U_2$ de la rangée rotorique 26 correspondant à U et $U_1$, on obtient le vecteur de vitesse absolue $V_2$ du flux d'air, formant un angle $\alpha_2$ avec la direction axiale, en l'occurrence opposé à l'angle $\beta_2$. C'est cependant la rangée rotorique 26 qui distribue le fluide dans l'entrefer E et il convient par conséquent de considérer le vecteur de vitesse $W_2$ du fluide dans un repère relatif, fixe avec la rangée rotorique en question, pour déterminer la distance parcourue par le fluide dans l'entrefer E.

Encore en référence à la figure 4, le flux d'air sortant de la deuxième rangée statorique 22 (à droite) située directement en avant la rangée rotorique 26 évoquée ci-avant, présente un vecteur de vitesse absolue $V_3$ formant un angle $\alpha_3$ avec l'axe de la turbomachine, similairement au vecteur $V_1$ et l'angle $\alpha_1$ en sortie de la première rangée statorique 22. La vitesse relative du fluide par rapport à la rangée rotorique 26 située directement en aval est représentée par le vecteur $W_3$. Similairement à ce qui a été détaillé ci-avant en relation avec la première rangée statorique 22 (à gauche sur la figure), il convient de considérer le vecteur de vitesse absolue $V_3$ pour déterminer la distance parcourue par le fluide dans l'entrefer E.

En résumé, l'écoulement du fluide dans un entrefer E entre une partie fixe 22 et une partie mobile 26 de la turbomachine n'est pas nécessairement axial mais bien incliné suivant les angles $\alpha_1$, $\beta_2$ et $\alpha_3$ évoqués ci-avant en relation avec la figure 4. Ces angles sont potentiellement importants et influent de manière notoire la distance parcourue par le fluide dans l'entrefer.

Or un écoulement de fluide non guidé par une paroi, ce qui est précisément le cas dans l'entrefer, va avoir tendance à ne pas suivre la direction de la tangente du bord aval de la plateforme amont. L'écoulement va avoir tendance à pénétrer dans l'entrefer, en direction radiale vers l'axe de la turbomachine. Par conséquent, plus le parcours de l'écoulement dans l'entrefer est grand, plus l'écoulement sera dévié radialement dans l'entrefer et donc grand sera le besoin d'inclinaison du profil longitudinal supérieur de la plateforme annulaire et/ou d'arrondi ou de chanfrein du bord amont.

En sortie de partie fixe 22, il convient de considérer le vecteur de vitesse absolue et en sortie de partie mobile 26, il convient de considérer le vecteur de vitesse relative, c'est-à-dire dans un référentiel tournant avec la partie mobile. Pour les entrefers avec des inclinaisons plus grandes et donc des parcours plus long, il convient d'incliner davantage le profil longitudinal supérieur de la plateforme aval de l'entrefer afin de minimiser le risque de marche montante.

Il est entendu que les angles d'inclinaison du flux de fluide dans les entrefers ne sont pas constants sur toute la plage de régime et de charge de la turbomachine. Il convient par conséquent de considérer un ou plusieurs points spécifiques de fonctionnement de la turbomachine comme par exemple un ou plusieurs points de fonctionnement critique pour la consommation spécifique de la turbomachine et/ou l'opérabilité du compresseur de la turbomachine.

La figure 5 illustre un autre phénomène influençant l'écoulement de fluide dans l'entrefer en sortie de partie fixe, à savoir l'écoulement de fuite circulant sous la plateforme de la rangée statorique 22. En effet, l'étanchéité entre une rangée d'aubes statoriques 22 et le rotor 24 n'est pas parfaite en ce qu'un certain débit de fuite a lieu entre la ou les léchettes 24.1 du rotor 24 et les moyens d'étanchéité tournants 22.4 sur une face intérieure de la plateforme 22.2. Ce débit dépend essentiellement de la différence de pression entre l'amont et l'aval de la rangée d'aubes statoriques 22 et le jeu $\delta$ au niveau des moyens d'étanchéité tournants. Ce débit rentre dans l'entrefer aval, traverse la cavité du rotor 24 et débouche dans l'entrefer amont essentiellement perpendiculairement à la veine fluide et modifie ainsi l'orientation du flux dans un plan longitudinal passant par l'axe de la turbomachine, et ce de manière opposée en amont et en aval.

En amont, le débit de fuite sortant de la cavité s'ajoute au débit de la veine fluide et le dévie vers le haut. Cet angle de déviation $\gamma$ peut être calculé en additionnant la quantité de mouvement du fluide $P$ avant ce débit de fuite et la quantité de mouvement du débit de fuite $P_f$. La quantité de mouvement est une grandeur vectorielle égale, pour un écoulement de fluide, au vecteur de vitesse multiplié par le débit massique. La quantité de mouvement corrigée du fluide après le débit de fuite, $P_c$ ,est alors égal à $P+Pr$. De cette relation, on peut en déduire l'angle $\gamma$.

Similairement, en aval, le débit de fuite rentrant dans la cavité s'ajoute au débit de la veine fluide et le dévie vers le bas d'un angle $\gamma$', qui en première approximation est égal à l'angle $\gamma$. L'angle $\gamma$' peut aussi être obtenu en additionnant les quantités de mouvement respectives $P'$ et $P_f^{\prime}$ pour obtenir la quantité de mouvement corrigée du fluide après le débit de fuite $P_c$'. Cette méthode de calcul est un exemple, étant entendu que d'autres méthodes notamment de simulation informatique peuvent être utilisées.

L'écoulement fluidique à la sortie d'une rangée statorique 22 présente par conséquent une inclinaison azimutale dirigée vers l'intérieur, nécessitant de prévoir une inclinaison de la plateforme rotorique directement en aval plus importante, en comparaison avec une plateforme statorique.

La figure 6 illustre les profils longitudinaux extérieurs 22.3 et 26.3 des plateformes 22.2 et 26.2 de rangées statoriques et rotoriques se succédant, ces profils étant corrigés de manière à optimiser l'écoulement de fluide, tenant compte, d'une part, des tolérances de fabrication et d'assemblage et, d'autre part, des phénomènes décrits ci-avant en relation avec les figures 4 et 5. Ces profils 22.3 et 26.3 sont les profils théoriques et présentent un abaissement de bord amont $I_{Si}$ et $I_{Ri}$ (i étant un nombre entier positif correspondant au numéro d'une rangée statorique ou rotorique) obtenu au moins en partie par une inclinaison des profils vers l'amont et l'intérieur par rapport aux profils nominaux N. Ces abaissements $I_{Si}$ et $I_{Ri}$ expriment une distance d'abaissement radial du bord amont 22.3.1 et 26.3.1 par rapport au profil nominal N. Ces abaissements sont obtenus au moins en partie par une rotation des profils longitudinaux extérieurs 22.3 et 26.3 d'un angle $\alpha_{Si}$ et $\alpha_{Ri}$ autour du bord aval 22.3.3 et 26.3.3. Ils peuvent en plus être augmentés par la formation d'arrondis 22.3.2 et 26.3.2, en l'occurrence des arcs de cercle de rayon de courbure $R_{Si}$ et $R_{Ri}$ (i étant un nombre entier positif correspondant au numéro d'une rangée statorique ou rotorique) aux bords amonts 22.3.1 et 26.3.1 des profils longitudinaux extérieurs 22.3 et 26.3. A la lumière de ce qui a été détaillé en relation avec la figure 2, les tolérances de fabrication et d'assemblage ont pour effet, en pratique, que les profils réels, c'est-à-dire sur les turbomachines produites et assemblées sur base de ces profils théoriques, vont dévier des profils théoriques dans les tolérances en question, le cas plus défavorable étant lorsque le profil réel est au maximum des tolérances vers l'extérieur de manière à former une marche montante. Les abaissements illustrés à la figure 6 sont par conséquent dimensionnés pour minimiser les pertes aérodynamiques dans ces conditions défavorables dans les limites de tolérances de fabrication et d'assemblage ainsi que des particularités du flux dans la veine fluide telles qu'illustrées en relation avec la figure 5.

On observe à la figure 6 que les profils longitudinaux extérieurs 26.3 des plateformes 26.2 de rangées rotoriques présentent un abaissement de bord amont $I_{R1}$ et $I_{R2}$ plus important que l'abaissement de bord amont $I_{S1}$ et $I_{S2}$ des profils longitudinaux extérieurs 22.3 des plateformes 22.2 de rangées statoriques, essentiellement en raison du fait que le flux dans les entrefers directement en amont des rangées rotoriques sont déviés vers l'intérieur (angle azimutal $\gamma'$ à la figure 5) et, similairement, le flux dans les entrefers directement en amont des rangées statoriques sont déviés vers l'extérieur (angle azimutal $\gamma$ à la figure 5). Les inclinaisons du flux dues aux orientations des aubes, telles qu'évoquées en relation avec la figure 4 (à savoir les angles $\alpha_1$, $\beta_2$ et $\alpha_3$) peuvent influencer cette tendance en l'intensifiant ou en la diminuant. En effet, en référence à la figure 4 décrite précédemment, on peut observer que l'angle $\beta_2$ est supérieur aux angles $\alpha_1$ et $\alpha_3$ (en valeur absolue, c'est-à-dire sans considération du signe positif ou négatif de l'angle par rapport à l'axe principal), ce qui veut dire que, pour des entrefers de même taille, le parcours du flux en sortie de la rangée rotorique 26 est supérieur au parcours du flux en sortie des rangées statoriques 22. Dans ce cas, l'abaissement du bord amont du profil extérieur de la plateforme de la rangée statorique 22 directement en aval de cette rangée rotorique 26 en question sera augmenté. Les angles d'inclinaison $\alpha_1$, $\beta_2$ et $\alpha_3$ illustrés à la figure 4 sont cependant illustratifs en ce qu'ils peuvent prendre d'autres valeurs, notamment les angles d'inclinaison du flux en sortie de certaines rangées rotoriques peuvent être supérieurs aux angles d'inclinaison du flux en sortie de certaines rangées rotoriques.

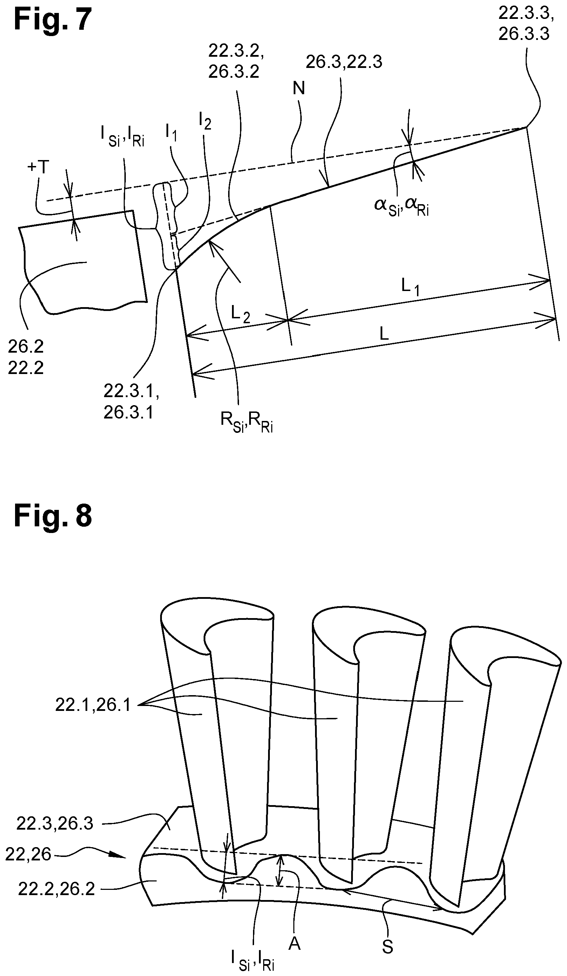

La figure 7 est une représentation détaillée et de profil d'une surface longitudinale supérieure d'une plateforme annulaire statorique ou rotorique. La figure représente, à gauche, le bord aval d'une plateforme annulaire rotorique 26.2 ou statorique 22.2 ; et, à droite, la surface longitudinale supérieure 22.3 ou 26.3 d'une plateforme statorique 22.2 ou rotorique 26.2 adjacente. Le profil nominal N, déjà évoqué aux figures 3 et 6, y est représenté en pointillé en tenant compte d'une tolérance de fabrication et/ou d'assemblage +T ayant pour effet de monter la surface longitudinale supérieure 22.3 ou 26.3 par rapport à la surface longitudinale supérieure de la rangée rotorique 26.2 ou statorique 22.2 située directement en amont. On peut observer que la surface longitudinale supérieure 22.3 ou 26.3 comprend une première portion, en l'occurrence principale, correspondant à une rotation du profil nominal N autour du bord aval 22.3.3 ou 26.3.3 d'un angle $\alpha_{Si}$ ou $\alpha_{Ri}$, et une deuxième portion correspondant à l'arrondi 22.3.2 ou 26.3.2, en l'occurrence un arc de cercle d'un rayon $R_{Si}$ ou $R_{Ri}$. La première portion est avantageusement tangente à la deuxième portion. L'arrondi 22.3.2 ou 26.3.2 s'étend, suivant la direction principale de la veine fluide sur une distance

$L_1$ correspondant à une fraction de la longueur totale L de la surface longitudinale supérieure 22.3 ou 26.3, ladite fraction pouvant être comprise entre 20 et 30%. La portion principale de la surface longitudinale supérieure 22.3 ou 26.3, quant à elle s'étend sur une longueur $L_2$ correspondant au reste de la longueur totale L de la surface longitudinale supérieure 22.3 ou 26.3. On peut observer que l'abaissement de bord amont $I_{Si}$ ou $I_{Ri}$ est la somme de deux abaissements partiels, à savoir un abaissement partiel $I_1$ résultant de l'inclinaison du profil par rapport au profil nominal N et un abaissement partiel $I_2$ résultant de l'arrondi 22.3.2 ou 26.3.2. Chacun de ces abaissements partiels $I_1$ et $I_2$ correspond à une fraction de l'abaissement de bord amont $I_{Si}$ ou $I_{Ri}$, avantageusement comprise entre 40 et 60%, où $I_1 + I_2 = I_{Si}$ ou $I_{Ri}$.

La figure 8 est une représentation d'un segment de rangée statorique 22 ou rotorique 26 de la turbomachine, conformément à l'invention. En référence à ce qui a été décrit en relation avec la figure 6, le profil longitudinal supérieur 22.3 ou 26.3 de la plateforme 22.2 ou 26.2 de la rangée statorique 22 ou rotorique 26 est incliné vers l'amont et l'intérieur. A la figure 8, l'inclinaison vers l'amont et vers l'intérieur du profil longitudinal supérieur 22.3 ou 26.3 de la plateforme 22.2 ou 26.2 oscille de manière cyclique le long de la circonférence de la plateforme, entre une valeur maximale d'inclinaison au niveau des aubes 22.1 ou 26.1 et une valeur minimale d'inclinaison entre les aubes en question. Ceci contribue à une variation cyclique de l'abaissement de bord amont $I_R$ ou $I_S$, d'amplitude A et de période S, qui permet de tenir compte de l'hétérogénéité azimutale d'injection et de prélèvement de l'écoulement de fuite dans les entrefers devant les rangées statoriques et rotoriques, due à la présence des aubes. En effet, l'obstruction générée par les aubes directement en aval d'un entrefer génère un effet de blocage de l'écoulement favorisant un écoulement rentrant dans l'entrefer, précisément en face des aubes. En dehors de ces zones, l'écoulement a davantage tendance à remonter dans la veine par rapport à l'écoulement moyen. Il est ainsi avantageux d'incliner davantage le profil longitudinal supérieur des plateformes dans les zones soumises à cet effet de blocage, à savoir en face des aubes. Il en résulte alors une inclinaison oscillant, préférentiellement de manière cyclique, le long de la plateforme suivant sa direction circonférentielle. Cela vaut aussi bien pour les rangées rotoriques que statoriques, les phénomènes de blocage pouvant cependant être différents d'une rangée à l'autre, en fonction notamment de l'orientation et la taille des aubes.

Il est à noter que l'inclinaison oscillante et cyclique détaillée ci-avant peut être mise en œuvre indépendamment des tolérances de fabrication et l'influence de recirculation de fuite sous les plateformes annulaires statoriques, telle que détaillée en relation avec la figure 5, car le phénomène d'hétérogénéité azimutale d'injection et de prélèvement de l'écoulement de fuite devant les plateformes annulaires statoriques et rotoriques est un phénomène qui n'est pas lié directement au problème de marche montante entre deux plateformes annulaires adjacentes résultant de tolérances de fabrication et d'assemblage, ni encore à l'influence de la recirculation de fuite. Cela signifie que la valeur minimale d'inclinaison, entre les aubes, peut être nulle. A contrario, cette valeur minimale d'inclinaison entre les aubes d'une plateforme annulaire rotorique 26.2 peut être non nulle et supérieure à la valeur minimale d'inclinaison, nulle ou non nulle, entre les aubes d'une plateforme annulaire statorique 22.2, de manière à, en outre, d'une part, éviter une marche montante due aux tolérances de fabrication et d'assemblage et, d'autre part, compenser l'effet de la recirculation de fuite au niveau statorique.

L'alignement du profil oscillant de l'inclinaison avec les aubes peut être ajusté en fonction de la direction effective du flux dans la veine fluide dans l'entrefer directement en amont des aubes concernées. En effet, en référence à la discussion en relation avec la figure 4, la vitesse du flux dans l'entrefer n'est en principe pas axiale (plus précisément la direction est située dans un plan axial et tangent au profil longitudinal supérieur de la plateforme annulaire) mais bien inclinée essentiellement suivant le profil des aubes qui reçoivent le flux. Selon l'invention, les points ou zones d'inclinaison maximale du profil d'inclinaison oscillante sont aligné(e)s avec les bords d'attaque des aubes suivant le profil desdites aubes, à savoir suivant les lignes de cordes desdites aubes. Il en va de même ou zones d'inclinaison minimale qui sont aligné(e)s avec les espaces entre chaque paire d'aubes adjacentes.

L'amplitude d'oscillation A de l'abaissement de bord amont du profil longitudinal supérieur 22.3 ou 26.3 de la plateforme 22.2 ou 26.2 de la rangée statorique 22 ou rotorique 26, telle qu'illustrée à la figure 8 peut être supérieure à 0.05mm et/ou inférieure à 0.15mm. Le pas S de l'oscillation est avantageusement égal à un pas d'aubes, c'est-à-dire le nombre d'aubes/$2\pi r$, où r est le rayon intérieur de la veine fluidique.

Il est cependant entendu que ces valeurs peuvent varier et potentiellement dévier des plages susmentionnées. Elles dépendent d'un certain nombre de paramètres comme notamment la taille de turbomachine, les tolérances de fabrication et d'assemblage, la distance des entrefers et les conditions d'écoulement dans la veine fluide (en particulier la vitesse).

## Revendications

1. Ensemble d'étage(s) de compression d'une turbomachine (2), formant un passage annulaire de veine fluide (F.1) et comprenant au moins une alternance de rangées d'aubes statoriques (22) et rotoriques (26), avec des plateformes annulaires (22.2, 26.2) intérieures à la veine fluide (F.1) et délimitant ladite veine ; au moins une plateforme annulaire statorique (22.2) et/ou au moins une plateforme annulaire rotorique (26.2) présentant un profil longitudinal extérieur (22.3, 26.3) incliné vers l'intérieur et vers l'amont par rapport à un profil nominal (N) de la veine fluide (F.1) passant par un bord aval de ladite plateforme annulaire et parallèle à un profil théorique et parfait de la veine fluide ;

   dans lequel l'inclinaison du profil longitudinal extérieur (22.3, 26.3) de la ou de chacune des plateformes annulaires (22.2, 26.2), par rapport au profil nominal (N) de la veine fluide (F.1), oscille le long de la circonférence de ladite ou desdites plateformes annulaires (22.2, 26.2), entre une valeur maximale en face des aubes (26.1, 22.1) de la dite plateforme annulaire (22.2, 26.2) suivant une ligne de cordes desdites aubes et une valeur minimale entre chaque paire d'aubes adjacentes de la dite plateforme annulaire (22.2, 26.2) ;
   **caractérisé en ce que**
   l'inclinaison du profil longitudinal extérieur (22.3, 26.3) de la ou de chacune des plateformes annulaires (22.2, 26.2) par rapport au profil nominal (N) de la veine fluide (F.1) est réalisée par un pivotement dudit profil longitudinal extérieur (22.3, 26.3) autour du bord aval (22.3.3, 26.3.3) dudit profil longitudinal extérieur (22.3, 26.3).

2. Ensemble d'étage(s) de compression selon la revendication 1, **caractérisé en ce que** l'inclinaison du profil longitudinal extérieur (22.3, 26.3) de la ou de chacune des plateformes annulaires (22.2, 26.2), par rapport au profil nominal (N) de la veine fluide (F.1) contribue à un abaissement d'une distance radiale $I_{Ri}$ et/ou $I_{Si}$, respectivement, d'un bord amont (22.3.1, 26.3.1) dudit profil longitudinal extérieur (22.3, 26.3), par rapport audit profil nominal (N) de la veine fluide (F.1).

3. Ensemble d'étage(s) de compression selon la revendication 2, **caractérisé en ce que** les valeurs maximale et minimale de distance radiale $I_{Ri}$ et/ou $I_{Si}$ d'abaissement de bord amont du profil longitudinal extérieur (26.3) de la ou de chacune des plateformes annulaires (22.2, 26.2), par rapport au profil nominal (N) de la veine fluide (F.1), présentent une différence A comprise entre 0.05 et 0.15mm.

4. Ensemble d'étage(s) de compression selon l'une des revendications 1 à 3, **caractérisé en ce que** l'abaissement de bord amont du profil longitudinal extérieur (22.3, 26.3) de la ou de chacune des plateformes annulaires (22.2, 26.2) par rapport au profil nominal (N) de la veine fluide (F.1) est réalisé non seulement par l'inclinaison, mais aussi par un arrondi (22.3.2, 26.3.2) du bord amont (22.3.1, 26.3.1) dudit profil longitudinal extérieur (22.3, 26.3).

5. Ensemble d'étage(s) de compression selon la revendication 4, **caractérisé en ce que** l'arrondi (22.3.2, 26.3.2) du bord amont (22.3.1, 26.3.1) du profil longitudinal extérieur (22.3, 26.3) de la ou des plateformes annulaires (22.2, 26.2) présente un rayon de courbure $R_{Ri}$ ou $R_{Si}$, respectivement, supérieur à 5mm et inférieur à 15mm

6. Ensemble d'étage(s) de compression selon l'une des revendications 4 et 5, **caractérisé en ce que** l'arrondi (22.3.2, 26.3.2) du profil longitudinal extérieur (22.3, 26.3) de la ou de chacune des plateformes annulaires (22.2, 26.2) s'étend sur une distance supérieure à 20% et inférieure à 30% de l'étendue totale dudit profil longitudinal extérieur (22.3, 26.3).

7. Procédé de dimensionnement d'au moins une plateforme annulaire (22.2, 26.2) d'une rangée d'aubes statoriques (22) et/ou d'une rangée d'aubes rotoriques (26) d'un ensemble d'étage(s) de compression d'une turbomachine (2), lesdites rangées d'aubes étant en alternance et formant des entrefers (E), le procédé comprenant, pour la ou chacune des plateformes annulaires (22.2, 26.2), de déterminer, en fonction de l'entrefer (E) directement en amont, inclinaison d'un profil longitudinal extérieur (22.3, 26.3) de ladite plateforme annulaire vers l'intérieur et vers l'amont par rapport à un profil nominal (N) de la veine fluide (F.1) passant par un bord aval de ladite plateforme annulaire et parallèle à un profil théorique et parfait de la veine fluide ; dans lequel l'inclinaison de la ou chacune des plateformes annulaires (22.2, 26.2) oscille le long de la circonférence de ladite plateforme annulaire (22.2, 26.2), entre une valeur maximale en face des aubes (26.1, 22.1) de la dite plateforme annulaire (22.2, 26.2) suivant une ligne de cordes desdites aubes et une valeur minimale entre chaque paire d'aubes adjacentes de la dite plateforme annulaire (22.2, 26.2) ;
**caractérisé en ce que**
l'inclinaison du profil longitudinal extérieur (22.3, 26.3) de la ou de chacune des plateformes annulaires (22.2, 26.2) par rapport au profil nominal (N) de la veine fluide (F.1) est réalisée par un pivotement dudit profil longitudinal extérieur (22.3, 26.3) autour du bord aval (22.3.3, 26.3.3) dudit profil longitudinal extérieur (22.3, 26.3).

**Patentansprüche**

1. Eine Verdichtungsstufenbaugruppe einer Turbomaschine (2), die einen ringförmigen Durchgang für den Fluidstrom (F.1) bildet und mindestens abwechselnde Reihen von Stator- (22) und Rotor- (26) Schaufeln mit Ringformplattformen (22.2, 26.2) innerhalb des Fluidstroms (F.1) umfasst, die den Fluidstrom begrenzen; wobei mindestens eine Stator-Ringplattform (22.2) und/oder mindestens eine Rotor-Ringplattform (26.2) mit einem äußeren Längsprofil (22.3, 26.3), das nach innen und stromaufwärts eines Nennprofils (N) des Fluidstroms (F.1) geneigt ist, der durch eine stromabwärts gelegene Kante der jeweiligen Ringplattform und parallel zu einem theoretischen und perfekten Profil des Fluidstroms verläuft;

wobei die Neigung des äußeren Längsprofils (22.3, 26.3) der oder jeder Ringformplattform (22.2, 26.2) relativ zum Nennprofil (N) des Fluidstroms (F.1) entlang des Umfangs der Ringformplattform oder Plattformen (22.2, 26 .2) zwischen einem Maximalwert vor den Flügeln (26.1, 22.1) der Ringformplattform (22.2, 26.2) entlang einer Sehnenlinie der Flügel und einem Minimalwert zwischen jedem Paar benachbarter Flügel der Ringformplattform (22.2, 26.2) oszilliert;
**dadurch gekennzeichnet, dass**
die Neigung des äußeren Längsprofils (22.3, 26.3) der oder jeder der Ringformplattformen (22.2, 26.2) relativ zum Nennprofil (N) des Fluidstroms (F.1) durch Schwenken des äußeren Längsprofils (22.3, 26.3) um die stromabwärts gelegene Kante (22.3.3, 26.3.3) des äußeren Längsprofils (22.3, 26.3.3) erreicht wird.

2. Kompressionsstufenbaugruppe nach Anspruch 1, **dadurch gekennzeichnet, dass** die Neigung des äußeren Längsprofils (22.3, 26.3) der oder jeder der Ringformplattformen (22.2, 26.2) relativ zum Nennprofil (N) des Fluidstroms (F.1) trägt zur Subtraktion eines radialen Abstands$_{IRi}$ bzw.$_{ISi}$ einer stromaufwärtigen Kante (22.3.1, 26.3.1) des äußeren Längsprofils (22.3, 26.3) relativ zum Nennprofil (N) des Fluidstroms (F.1) bei.

3. Kompressionsstufenbaugruppe nach Anspruch 2, **dadurch gekennzeichnet, dass** die maximalen und minimalen Werte des radialen Abstands$_{IRi}$ und/oder$_{ISi}$ des Abstiegs der stromaufwärtigen Kante des äußeren Längsprofils (26.3) der oder jeder der Ringformplattformen (22.2, 26.2) in Bezug auf das Nennprofil (N) des Fluidstroms (F.1) eine Differenz A zwischen 0,05 und 0,15 mm aufweisen.

4. Kompressionsstufenbaugruppe gemäß einem der Ansprüche 1 bis 3, **dadurch gekennzeichnet, dass** die Absenkung der stromaufwärtigen Kante des äußeren Längsprofils (22.3, 26.3) der oder jeder der Ringformplattformen (22.2, 26.2) relativ zum Nennprofil (N) des Fluidstroms (F.1) wird nicht nur durch Neigen, sondern auch durch Abrunden (22.3.2, 26.3.2) der stromaufwärtigen Kante (22.3.1, 26.3.1) des äußeren Längsprofils (22.3, 26.3.3) erreicht.

**5.** Der Satz von Druckböden gemäß Anspruch 4, **dadurch gekennzeichnet, dass** die Rundung (22.3.2, 26.3.2) der stromaufwärts gelegenen Kante (22.3.1, 26.3.1) des äußeren Längsprofils (22.3, 26.3) der oder jeder der Ringdecks (22.2, 26.2) einen Krümmungsradius $R_{Ri}$ bzw. $R_{Si}$ von mehr als 5 mm und weniger als 15 mm aufweist.

**6.** Kompressionsplattform-Baugruppe gemäß einem der Ansprüche 4 und 5, **dadurch gekennzeichnet, dass** die Rundung (22.3.2, 26.3.2) der stromaufwärts gelegenen Kante (22.3.1, 26.3.1) des äußeren Längsprofils (22.3, 26.3) der Ringformplattform oder jeder der Ringformplattformen (22.2, 26.2) über eine Strecke von mehr als 20 % und weniger als 30 % der Gesamtausdehnung des äußeren Längsprofils (22.3, 26.3) erstreckt.

**7.** Verfahren zum Bemessen mindestens einer Ringformplattform (22.2, 26.2) einer Stator-Leitschaufelanordnung (22) und/oder einer Rotor-Leitschaufelanordnung (26) einer Turbomaschinen-Verdichterstufenbaugruppe (2), wobei die Leitschaufelanordnungen abwechselnd angeordnet sind und Luftspalte (E) bilden, wobei das Verfahren für die oder jede Ringformplattform (22.2, 26.2) in Abhängigkeit von dem direkt stromaufwärts gelegenen Luftspalt (E) eine Neigung eines äußeren Längsprofils (22.3, 26.3) der Ringformplattform nach innen und stromaufwärts relativ zu einem Nennprofil (N) des Fluidstroms (F.1) zu bestimmen, der durch eine stromabwärts gelegene Kante der jeweiligen Ringformplattform und parallel zu einem theoretischen und perfekten Fluidstromprofil verläuft;

wobei die Neigung der oder jeder Ringformplattform (22.2, 26.2) entlang des Umfangs der jeweiligen Ringformplattform (22.2, 26.2) zwischen einem Maximalwert vor den Schaufeln (26.1, 22.1) der jeweiligen Ringformplattform (22.2, 26.2) entlang einer Sehnenlinie der jeweiligen Schaufeln und einem Minimalwert zwischen jedem Paar benachbarter Schaufeln der Ringformplattform (22.2, 26.2); **dadurch gekennzeichnet, dass** die Neigung des äußeren Längsprofils (22.3, 26.3) der oder jeder der Ringformplattformen (22.2, 26.2) relativ zum Nennprofil (N) des Fluidstroms (F.1) durch Schwenken des äußeren Längsprofils (22.3, 26.3) um die stromabwärts gelegene Kante (22.3.3, 26.3.3) des äußeren Längsprofils (22.3, 26.3) erreicht.

**Claims**

**1.** Set of compression stage(s) of a turbomachine (2), forming an annular fluid passage (F.1) and comprising at least one alternating row of stator (22) and rotor (26) blades, with annular platforms (22.2, 26.2) inside the fluid vein (F.1) and delimiting said vein; at least one annular stator platform (22.2) and/or at least one annular rotor platform (26.2) having an outer longitudinal profile (22.3, 26.3) inclined inwards and upstream with respect to to a nominal profile (N) of the fluid stream (F.1) passing through a downstream edge of said annular platform and parallel to a theoretical and perfect profile of the fluid stream;

wherein the inclination of the outer longitudinal profile (22.3, 26.3) of the or each of the annular platforms (22.2, 26.2), relative to the nominal profile (N) of the fluid stream (F.1), oscillates along the circumference of said annular platform(s) (22.2, 26.2), between a maximum value opposite the blades (26.1, 22.1) of said annular platform (22.2, 26.2) following a chord line of said blades and a minimum value between each pair of adjacent blades of said annular platform (22.2, 26.2)
**characterized in that** the inclination of the outer longitudinal profile (22.3, 26.3) of the or each annular platform (22.2, 26.2) relative to the nominal profile (N) of the fluid stream (F.1) is achieved by pivoting said outer longitudinal profile (22.3, 26.3) about the downstream edge (22.3.3, 26.3.3) of said outer longitudinal profile (22.3, 26.3).

**2.** Set of compression stage(s) according to claim 1, **characterized in that** the inclination of the outer longitudinal profile (22.3, 26.3) of the or each of the annular platforms (22.2, 26.2), with respect to the nominal profile (N) of the fluid stream (F.1) contributes to lowering a radial distance $I_{Ri}$ and/or $I_{Si}$, respectively, of an upstream edge (22.3.1, 26.3.1) of said outer longitudinal profile (22.3, 26.3), with respect to said nominal profile (N) of the fluid stream (F.1).

**3.** Set of compression stage(s) according to claim 2, **characterized in that** the maximum and minimum values of radial distance $I_{Ri}$ and/or $I_{Si}$ of upstream edge lowering of the outer longitudinal profile (26.3) of the or each of the platforms annular (22.2, 26.2), compared to the nominal profile (N) of the fluid stream (F.1), has a difference A of between 0.05 and 0.15mm.

**4.** Set of compression stage(s) according to one of claims 1 to 3, **characterized in that** the upstream edge lowering of the outer longitudinal profile (22.3, 26.3) of the or each of the annular platforms (22.2, 26.2) with respect to to the nominal profile (N) of the fluid stream (F.1) by not only by inclination, but also by a rounding (22.3.2, 26.3.2 ) of the upstream edge (22.3.1, 26.3.1) of said outer longitudinal profile (22.3, 26.3).

5. Set of compression stage(s) according to Claim 4, **characterized in that** the rounding (22.3.2, 26.3.2) of the upstream edge (22.3.1, 26.3.1) of the outer longitudinal profile (22.3, 26.3) of the annular platform or platforms (22.2, 26.2) has a radius of curvature $R_{Ri}$ or $R_{Si}$, respectively, greater than 5mm and less than 15mm

6. Set of compression stage(s) according to one of claims 4 and 5, **characterized in that** the rounding (22.3.2, 26.3.2) of the upstream edge (22.3.1, 26.3.1) of the longitudinal profile exterior (22.3, 26.3) of the or each of the annular platforms (22.2, 26.2) extends over a distance greater than 20% and less than 30% of the total extent of said outer longitudinal profile (22.3, 26.3) .

7. Method for dimensioning at least one annular platform (22.2, 26.2) of a row of stator blades (22) and/or of a row of rotor blades (26) of a set of stages compression of a turbomachine (2), said rows of blades being alternately and forming air gaps (E), the method comprising, for the or each of the annular platforms (22.2, 26.2), determining as a function of the air gap (E) directly upstream, an inclination of an outer longitudinal profile (22.3, 26.3) of said annular platform inwards and upstream with respect to a nominal profile (N) of the fluid vein (F.1) passing through a downstream edge of said annular platform and parallel to a theoretical and perfect profile of the fluid stream; wherein the inclination of the or each of the annular platforms (22.2, 26.2) oscillates along the circumference of the said annular platform (22.2, 26.2), between a maximum value in front of the blades (26.1, 22.1) of said annular platform (22.2, 26.2) following a chord line of said vanes and a minimum value between each pair of adjacent blades of said annular platform (22.2, 26.2); **characterized in that**

the inclination of the outer longitudinal profile (22.3, 26.3) of the or each annular platform (22.2, 26.2) relative to the nominal profile (N) of the fluid stream (F.1) is achieved by pivoting said outer longitudinal profile (22.3, 26.3) about the downstream edge (22.3.3, 26.3.3) of said outer longitudinal profile (22.3, 26.3).

EP 4 093 976 B1

# Fig. 1

# Fig. 2

# Fig. 3

11

## Fig. 4

## Fig. 5

## Fig. 6

## Fig. 7

22.3.2,
26.3.2

26.3, 22.3

N

22.3.3,
26.3.3

$I_{Si}, I_{Ri}$   $I_1$   $I_2$

+T

$\alpha_{Si}, \alpha_{Ri}$

$L_1$

$L_2$

$L$

26.2
22.2

22.3.1,
26.3.1

$R_{Si}, R_{Ri}$

## Fig. 8

22.1, 26.1

22.3, 26.3

22, 26

22.2, 26.2

$I_{Si}, I_{Ri}$

A

S

**RÉFÉRENCES CITÉES DANS LA DESCRIPTION**

**Documents brevets cités dans la description**

- US 20080310961 A1
- US 6524070 B1